# EUROPEAN PATENT APPLICATION

(11) **EP 4 621 561 A1**
(43) Date of publication of application: **24.09.2025**
(21) Application number: 25156663.4
(22) Date of filing: 07.02.2025
(51) Int. Cl.: G06F 8/65, B60L 53/30, B60L 53/66

(54) **METHODS AND SYSTEMS FOR CLIENT-LESS VEHICLE SOFTWARE UPDATES**

(30) Priority: 19.03.2024 US 202418609975
(71) Applicant: Red Bend Ltd., 4501307 Hod Ha'Sharon (IL)
(72) Inventor: ALBO, Yohan, 9643163 Jerusalem (IL); MANN, Oded, 4372005 Raanana (IL)
(74) Representative: Rummler, Felix

(57) **Abstract**

Systems and methods for vehicle software updates via over-the-air (OTA) integrated charging stations is herein provided. In one example, a method of an OTA integrated charging station comprises establishing communication between a computing system of the OTA integrated charging station and a vehicle computing system of an electric vehicle; determining one or more vehicle specifics of the electric vehicle from the vehicle computing system; establishing communication between the computing system and an original equipment manufacturer (OEM) system; retrieving a software update from the OEM system based on the one or more vehicle specifics; and the update to the vehicle computing system via a software installer thereof.

## Description

### FIELD

The disclosure relates to vehicle software updates, and more particularly to client-less vehicle software updates via vehicle charging stations.

### BACKGROUND

Electronic control units (ECUs), for example of electric vehicles, are responsible for managing and controlling various aspects of the vehicle's operation. The ECUs in an electric vehicle comprise several subsystems configured for specific functions. For example, an ECU may comprise a battery management system, a motor controller, a thermal management system, a charging controller, and more. Further, ECUs are equipped with software and/or firmware to execute control algorithms, respond to inputs, and manage the vehicle's various subsystems. Such software and/or firmware of the ECU periodically demand updates to enhance features, resolve issues, and/or otherwise update the software/firmware.

Software/firmware updates may be performed via wired connection or wirelessly via over-the-air (OTA). When performed via a wired connection, typically the software updates are performed at the dealership or other maintenance or service facility equipped for original equipment manufacturer (OEM) service. However, cadence of vehicles attending dealership or other maintenance facilities for regular maintenance procedures is often lower than a frequency of demanded software updates. Further, cost and inconvenience of dedicated visits to the dealership or maintenance facility for software updates may be a deterrent for drivers. OTA software updates provide an alternative to in-person software updates, whereby software is updated via WiFi or other wireless connection. However, in many circumstances, vehicles may not have reliable or regular access to WiFi or other wireless connection, such as cellular connection, or the drivers may not wish to incur the cost of using WiFi or cellular data to perform large software updates. Further, updating software OTA demands vehicle downtime which may be inconveniently timed for the driver. All of the above issues results in vehicle software not being regularly updated to latest software configurations. Further still, pre-integrating OTA clients on a plurality of vehicle models involves large processing power and storage and is time consuming. Thus, OEM production may include non-OTA enabled vehicles that would still demand in-person software updates.

### SUMMARY

In one or more embodiments, a method of an OTA integrated charging station comprises establishing communication between a computing system of the OTA integrated charging station and a vehicle computing system of an electric vehicle; determining one or more vehicle specifics of the electric vehicle from the vehicle computing system; establishing communication between the computing system and an original equipment manufacturer (OEM) system; retrieving a software update from the OEM system based on the one or more vehicle specifics; and the update to the vehicle computing system via a software installer thereof.

A complementary method of a vehicle computing system comprises establishing communication with a computing system of an over-the-air (OTA) integrated charging station; transmitting one or more vehicle specifics to the computing system of the OTA integrated charging station; and receiving a software update from the computing system of the OTA integrated charging station based on the one or more vehicle specifics.

In this way, the computing system of the OTA integrated charging station may communicate with both the vehicle computing system and the OEM system. The charging station may thus represent the vehicle when communicating with the OEM system in order to retrieve a software update for the vehicle. In this way, reliable WiFi or cellular data connection of the vehicle may not be a factor for obtaining OTA software updates, the vehicle may undergo frequent software updates to maintain optimal operation, and a queue of vehicles waiting for OTA software updates from the OEM system may be reduced.

### BRIEF DESCRIPTION OF THE DRAWINGS

The disclosure may be better understood from reading the following description of non-limiting embodiments, with reference to the attached drawings, wherein below:
FIG. 1 shows an exemplary software update system, in accordance with one or more embodiments of the present disclosure;
FIG. 2 shows an example partial view of a vehicle cabin including an instrument panel, in accordance with one or more embodiments of the present disclosure;
FIG. 3 shows a block diagram of an example in-vehicle computing system of a vehicle configured to receive software updates from a charging station, in accordance with one or more embodiments of the present disclosure;
FIG. 4 shows a first scenario for establishing communication between a charging station and a vehicle, in accordance with one or more embodiments of the present disclosure;
FIG. 5 shows a second scenario for establishing communication between a charging station and a vehicle, in accordance with one or more embodiments of the present disclosure;
FIG. 6 shows a third scenario for establishing communication between a charging station and a vehicle, in accordance with one or more embodiments of the present disclosure;
FIG. 7 shows a method of a charging station for retrieving and installing a software update for a vehicle, in accordance with one or more embodiments of the present disclosure; and
FIG. 8 shows a method of a vehicle for installing a software update from a charging station, in accordance with one or more embodiments of the present disclosure.

### DETAILED DESCRIPTION

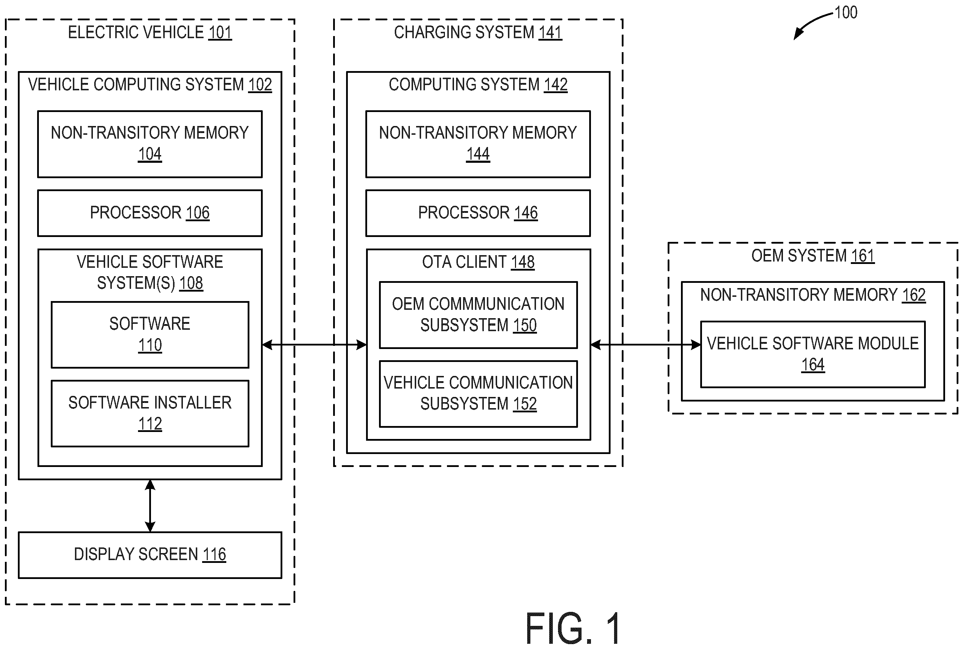

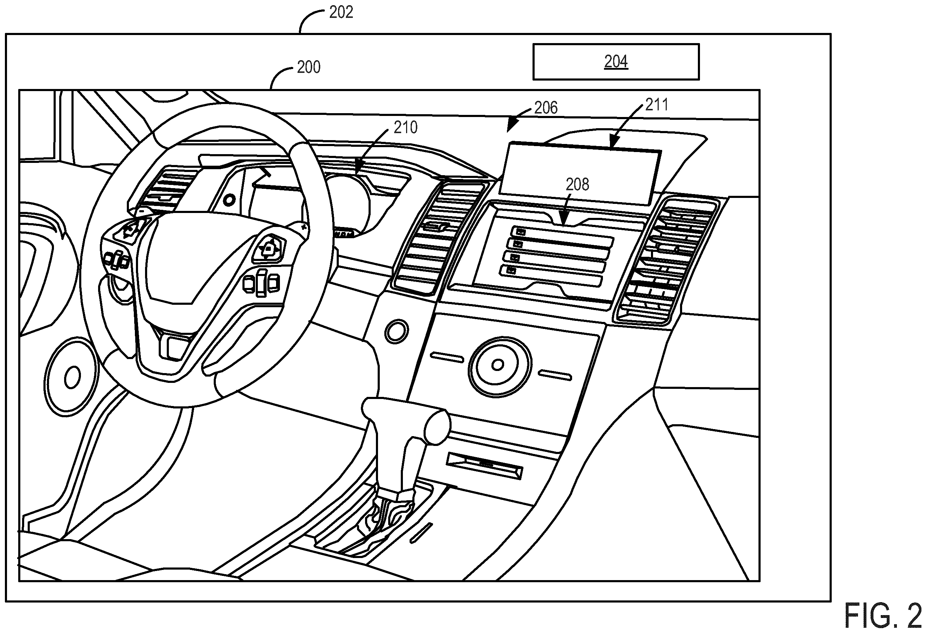

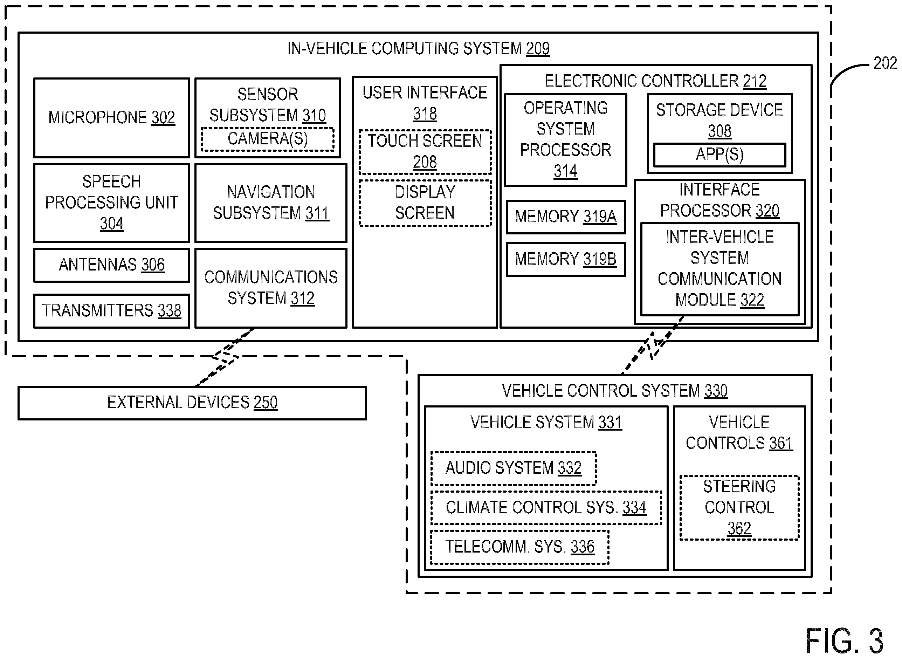

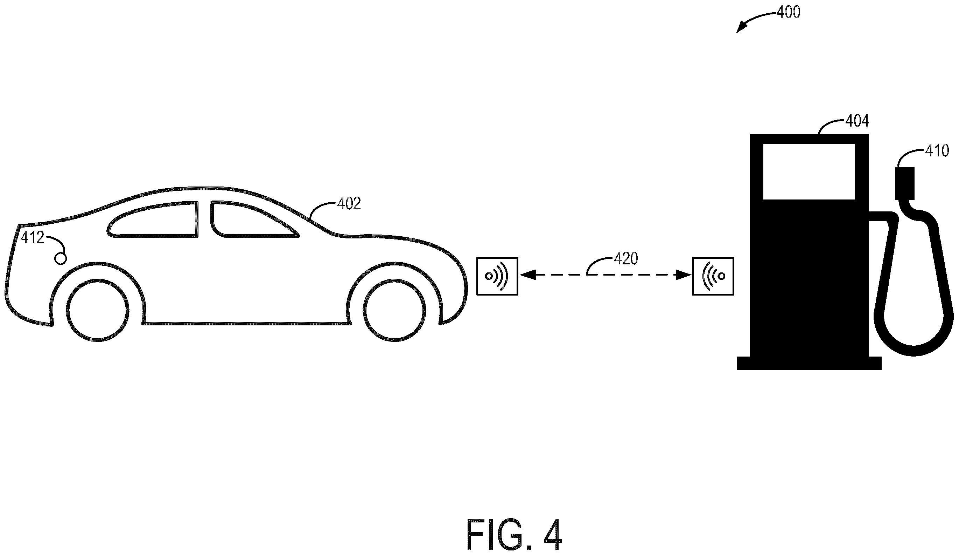

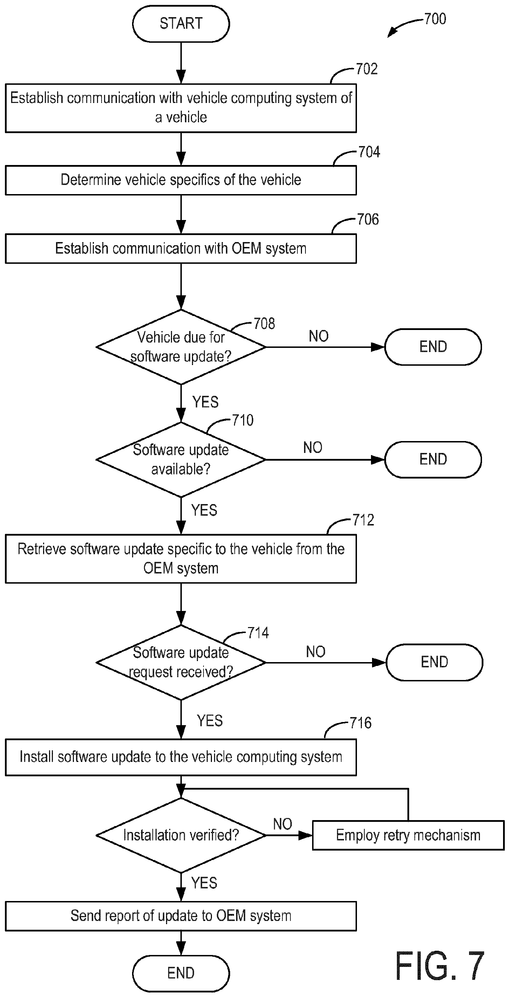

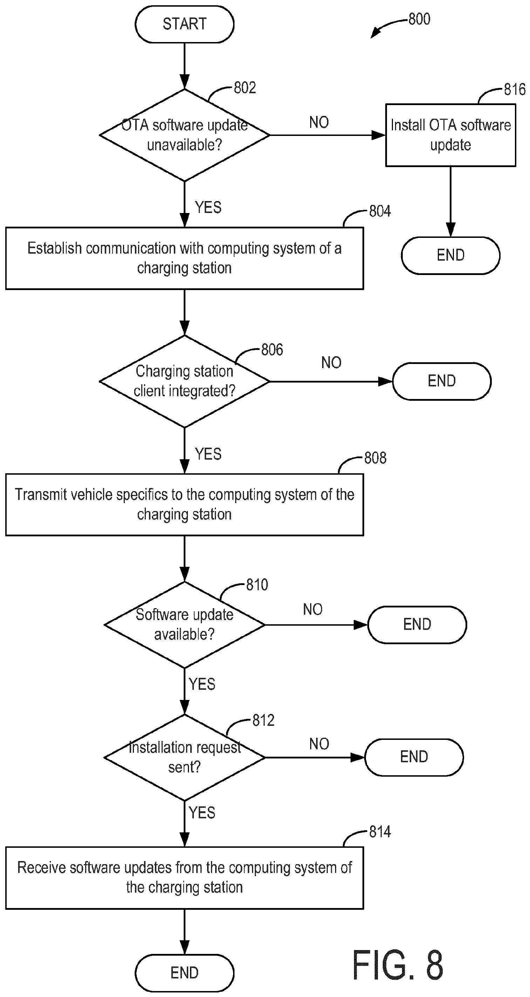

The following description relates to systems and methods for updating electric vehicle software via an over-the-air (OTA) client integrated charging station. In some examples, the charging station may comprise an OTA integrated subsystem of its computing system that communicates with an Original Equipment Manufacturer (OEM) system to retrieve software updates for vehicles. The charging station may also communicate with a vehicle to retrieve vehicle specifics in order to determine applicable software updates from the OEM system. The charging station may act to represent the vehicle when communicating with the OEM system to retrieve software updates via OTA technology. FIG. 1 shows an exemplary vehicle software update system that includes the vehicle, the charging station, and the OEM system. FIG. 2 shows an example partial view of a vehicle cabin including an instrument panel. FIG. 3 shows an example in-vehicle computing system of a vehicle configured to receive software updates from a charging station FIGS. 4-6 show various methods of establishing a communicative connection between the vehicle and the charging station. Methods for enabling vehicle software update using an OTA integrated client on a charging station are shown in FIGS. 7 and 8.

Electronic control units (ECUs) of electric vehicles are responsible for managing and controlling various aspects of the vehicle's operation. The ECUs in an electric vehicle comprise several subsystems such as battery management systems, thermal management systems, and more. ECUs operated based on stored software and/or firmware, which are configured to execute instructions, algorithms, and the like to manage the vehicle's subsystems during operation. Such software and/or firmware of the ECU periodically demand updates to enhance features, resolve issues, and/or otherwise update the software/firmware. Additionally, storing a multitude of currently operating software configurations can put strain on processing power of the OEM system, thus regular software updates are preferable to both the vehicle and the OEM.

Software updates may be performed via wired connection or wirelessly OTA. When performed via a wired connection, typically the software updates are performed at the dealership or other maintenance or service facility equipped for OEM service. However, cadence of vehicles attending dealership or other maintenance facilities for regular maintenance procedures is often lower than a frequency of demanded software updates. Further, cost and inconvenience of dedicated visits to the dealership or maintenance facility for software updates may be a deterrent for drivers. OTA software updates provide an alternative to in-person software updates, whereby software is updated via WiFi or other wireless connection. However, in many circumstances, vehicles may not have reliable or regular access to WiFi or other wireless connection, such as cellular connection, or the drivers may not wish to incur the cost of using WiFi or cellular data to perform large software updates. Further, updating software OTA demands vehicle downtime which may be inconveniently timed for the driver. All of the above issues results in vehicle software not being regularly updated to latest software configurations. Further still, pre-integrating OTA clients on every vehicle model involves large processing power and storage and is time consuming. Further, integrating and testing an OTA client into the vehicle computing system demands increased manufacturing time and engineering effort. Thus, OEM production may include non-OTA enabled vehicles that would still demand in-person software updates.

FIG. 1 shows a vehicle software update system 100, including a vehicle computing system 102 of an electric vehicle 101 and a computing system 142 of a charging system 141. The charging system 141 may be an electric vehicle charging station configured to provide electric power to the electric vehicle 101. The electric vehicle 101 may be a car, a bus, a truck, or a different type of machinery or vehicle operated by an operator. The electric vehicle 101 may be a battery electric vehicle (BEV), a plug-in hybrid electric vehicle (PHEV), or other type of vehicle that uses electric power and is configured to have a battery therein charged via a charging station. Further, while electric vehicles are herein described, it should be appreciated that other types of vehicles that receive power via a charging station, such as hydrogen-powered vehicles, may also apply without departing from the scope of this disclosure.

Vehicle computing system 102 includes one or more processors 106 configured to execute machine readable instructions stored in non-transitory memory 104. Similarly, computing system 142 of the charging system 141 includes one or more processors 146 configured to execute machine readable instructions stored in a non-transitory memory 144. Memory 104 and other memory referred to herein may include one or more data storage structures, such as optical memory devices, magnetic memory devices, or solid-state memory devices, for storing programs and routines executed by processor(s) 106 to carry out various functionalities disclosed herein. Memory 104 may include any desired type of volatile and/or non-volatile memory such as, for example, static random access memory (SRAM) dynamic random access memory (DRAM), flash memory, read-only memory (ROM), and/or the like.

Processor(s) 106 and other processors referred to herein, including processor 146, may be any suitable processor, processing unit, or microprocessor, for example. Processor(s) 106 may be a multi-processor system, and, thus, may include one or more additional processors that are identical or similar to each other and that are communicatively coupled via an interconnection bus. Processor(s) 106 may be single core or multi-core, and the programs executed thereon may be configured for parallel or distributed processing. In some embodiments, processor(s) 106 may optionally include individual components that are distributed throughout two or more devices, which may be remotely located and/or configured for coordinated processing. In some examples, one or more aspects of processor(s) 106 may be virtualized and executed by remotely-accessible networked computing devices configured in a cloud computing platform.

Vehicle computing system 102 may include one or more vehicle software systems 108. The vehicle software systems 108 may each include software 110. The software 110 may be stored in non-transitory memory 106 and may comprise instructions for executing programs, algorithms, and the like in order to control, manage, and respond to various systems of the vehicle, such as battery management systems, thermal management systems, and more. The software 110 as stored in memory may be a currently uploaded or downloaded version of operating software specific to the vehicle. For example, the type of vehicle, including make, model, year, and the like, may inform the operating software options available for the vehicle computing system 102.

The software 110 may comprise firmware, operating software, applications, services, and/or vehicle configuration data. The software 110 may be updatable. For example, a software installer 112 may be included in the one or more vehicle software systems 108. The software installer 112 may be configured to install a different, often newer version of the software. Typically, the software installer 112 enables software reflashing from external tools at a service provider (e.g., dealership service facility, maintenance facility, etc.). The external tools herein referenced may be diagnostic tools that utilize protocols like unified diagnostic services (UDS). The newly installed software may replace an existing software as the software 110 that is stored in memory. The one or more vehicle software systems 108 may be configured with various methods for installing software. For example, the one or more vehicle software systems 108 may be configured for direct installation, whereby a source of the new operating software is connected via a dedicated data cable (e.g., an Ethernet cable) or other type of data channel. Additionally or alternatively, one or more vehicle software systems 108 may be configured for remote installation, for example via wireless communication such as via WiFi communication, vehicle-to-everything (V2X) communication, cellular data communication, or other type of wireless communication. As previously described, OTA technology allows for remote delivery of software updates, including for example bug fixes, security patches, and new features, to vehicles without demanding that the vehicle be brought to a service station for software update. However, as noted above, storing software configurations in a queue for vehicles for installation via OTA demands a lot of storage power and processing power of an OEM system 161.

The electric vehicle 101 may be configured to be coupled to or otherwise connect with the charging system 141 in order to establish communication therebetween. The charging system 141 may be a charging station, such as a public service station or a private charging station. The charging system 141 may provide electrical power to the electric vehicle 101 to charge the electric vehicle's battery. The charging system 141 may comprise a charging cable to deliver the electric power to the electric vehicle 101.

As noted above, the charging system 141 may comprise a computing system 142. The computing system 142 may be configured to communicate with the vehicle computing system 102 via OTA technology and/or wired technology, as will be further described below. The charging system 141, in some examples, may be an OTA-integrated system. The computing system 142 may comprise the non-transitory memory 144, which stores instructions thereon executable by the processor 146. The computing system 142 may further comprise an OTA client 148. The OTA client 148 may be configured for one or more types of communication via OTA programming. The OTA client 148 may comprise at least two subsystems. For example, the OTA client 148 may comprise an OEM communication subsystem 150 and a vehicle communication subsystem 152. The OEM communication subsystem 150 of the OTA client 148 may be configured to communicate with the OEM system 161 and the vehicle communication subsystem 152 may be configured to communicate with the vehicle computing system 102.

The OEM system 161 may comprise a vehicle software module 164 stored in non-transitory memory 162. The non-transitory memory 162, similar to other non-transitory memories herein described, may include one or more data storage structures, such as optical memory devices, magnetic memory devices, or solid-state memory devices, for storing programs and routines executable by a processor. The vehicle software module 164 may include a plurality of operating system software configurations for a plurality of vehicles, including both current used software and software updates.

The OEM communication subsystem 150 may be configured to communicate with the OEM system 161, specifically with the vehicle software module 164, via OTA programming such as WiFi or cellular data in order to retrieve software update(s) for a given vehicle. The vehicle communication subsystem 152 may be configured to communicate with the one or more vehicle software systems 108 in order to deliver the retrieved software updates to the vehicle 101. The vehicle communication subsystem 152 may be configured for communication via OTA programming and/or via wired connections.

The electric vehicle 101 may also comprise a display screen 116, as will be further described with respect to FIG. 2. The display screen 116 may be a portion of an in-cabin infotainment system that is configured to display various elements, including alerts, pop-ups, and the like for which the user (e.g., the driver) may interact with.

FIG. 2 shows an example partial view of an interior of a cabin 200 of a vehicle 202, in which a driver and/or one or more passengers may be seated. Vehicle 202 may be a non-limiting example of the electric vehicle 101 shown by FIG. 1 and described above.

Vehicle 202 of FIG. 2 may be a motor vehicle including drive wheels (not shown) and a power source 204 configured to provide torque to the drive wheels, such as an internal combustion engine and/or battery. In examples in which the power source 204 includes an internal combustion engine, the internal combustion engine may include one or more combustion chambers which may receive intake air via an intake passage and exhaust combustion gases via an exhaust passage. Vehicle 202 may be a road automobile, among other types of vehicles. In some examples, vehicle 202 may include a hybrid propulsion system including an energy conversion device operable to absorb energy from vehicle motion and/or the engine and convert the absorbed energy to an energy form suitable for storage by an energy storage device. Vehicle 202 may be a fully electric vehicle in some examples, incorporating fuel cells, solar energy capturing elements, and/or other energy storage systems for powering the vehicle.

As shown, the vehicle 202 may include an instrument panel 206 with various displays and controls accessible to a human driver (also referred to as the user and/or occupant) of vehicle 202. For example, instrument panel 206 may include a touch screen 208 of an in-vehicle computing system (e.g., vehicle computing system 102 of FIG. 1) and an instrument cluster 210. Touch screen 208 may receive user input to the in-vehicle computing system for controlling visual display output, user preferences, control parameter selection, and so on. While the example system shown in FIG. 2 includes controls that may be performed via a user interface of the in-vehicle computing system, such as touch screen 208, without a separate control panel, in other embodiments, the vehicle may include additional control panels. In some embodiments, one or more hardware elements of in-vehicle computing system 209, such as touch screen 208, a display screen 211 (e.g. display screen 116), various control dials, knobs and buttons, memory, processor(s), and any interface elements (e.g., connectors or ports) may form an integrated head unit that is installed in instrument panel 206 of the vehicle. The head unit may be fixedly or removably attached in instrument panel 206. In additional or alternative embodiments, one or more hardware elements of in-vehicle computing system 209 may be modular and may be installed in multiple locations of the vehicle.

During operation of vehicle 202, the in-vehicle computing system may be configured to receive electronic signals from the various sensors of the vehicle 202, in some examples. Additionally, the in-vehicle computing system may be configured to update its software and install new software configurations. As previously described, the in-vehicle computing system may be configured to establish communication with an OTA client integrated charging station and receive software updates from the charging station. As an example, the charging station may determine vehicle specifics of the vehicle 202 and then determine, via communication with an OEM system, whether updated software is available for the vehicle 202. If a software update is available, the charging station may prompt the vehicle 202 to display a message on display screen 211 indicating software update availability for which the user may input a response indicating a desire to proceed with installing the software update.

FIG. 3 shows a block diagram of an in-vehicle computing system 209 integrated inside vehicle 202, where in-vehicle computing system 209 may be a non-limiting example of vehicle computing system 102 of electric vehicle 101 of FIG. 1. In-vehicle computing system 209 may be referred to herein as a controller and/or electronic controller in some examples. In-vehicle computing system 209 may perform one or more of the methods described herein in some embodiments. In-vehicle computing system 209 may include, or be coupled to, various vehicle systems, sub-systems, hardware components, as well as software applications and systems that are integrated in, or integratable into, vehicle 202.

In-vehicle computing system 209 may include one or more processors including an operating system processor 314 and an interface processor 320. Operating system processor 314 may execute an operating system on in-vehicle computing system 209, and control input/output, display, and other operations of in-vehicle computing system 209. Interface processor 320 may interface with a vehicle control system 330 via an inter-vehicle system communication module 322.

Inter-vehicle system communication module 322 may output data to one or more other vehicle systems 331 and/or one or more other vehicle control elements 361, while also receiving data input from other vehicle systems 331 and other vehicle control elements 361, e.g., by way of vehicle control system 330. When outputting data, inter-vehicle system communication module 322 may provide a signal via an in-vehicle communication network corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as GPS sensors, and so on), digital signals propagated through vehicle data networks (such as an engine controller area network (CAN) bus through which engine related information may be communicated, a climate control CAN bus through which climate control related information may be communicated, and a multimedia data network through which multimedia data is communicated between multimedia components in the vehicle), and so on. For example, in-vehicle computing system 209 may retrieve from the engine CAN bus the current speed of the vehicle estimated by the wheel sensors, a power state of the vehicle via a battery and/or power distribution system of the vehicle, an ignition state of the vehicle, a condition of one or more air bags of the vehicle, a condition of hazard lights of the vehicle, a condition of the power source 204 (shown by FIG. 2) of the vehicle, and so on. In addition, other interfacing means such as Ethernet may be used as well without departing from the scope of this disclosure.

A storage device 308 may be included in in-vehicle computing system 209 to store data such as instructions executable by operating system processor 314 and/or interface processor 320 in non-volatile form. Storage device 308 may store application data to enable in-vehicle computing system 209 to run an application for connecting to a cloud-based server and/or collecting information for transmission to the cloud-based server. The application may retrieve information gathered by vehicle systems/sensors, input devices (e.g., a user interface 318), data stored in one or more storage devices, such as a volatile memory 319A or a non-volatile memory 319B, devices in communication with the in-vehicle computing system, and so on. In-vehicle computing system 209 may further include a volatile memory 319A. Volatile memory 319A may be random access memory (RAM). Non-transitory storage devices, such as non-volatile storage device 308 and/or non-volatile memory 319B (e.g., non-transitory memory), may store instructions and/or code that, when executed by a processor (e.g., operating system processor 314 and/or interface processor 320), controls in-vehicle computing system 209 to perform one or more of the actions described in the disclosure.

A microphone 302 may be included in in-vehicle computing system 209 to receive voice commands from a user, to measure ambient noise in the vehicle, and so on. A speech processing unit 304 may process voice commands, such as the voice commands received from microphone 302. In some embodiments, in-vehicle computing system 209 may also be able to receive voice commands and sample ambient vehicle noise using a microphone included in an audio system 332 of the vehicle.

One or more additional sensors may be included in a sensor subsystem 310 of in-vehicle computing system 209. For example, sensor subsystem 310 may include a camera, such as a rear view camera for assisting a user in parking the vehicle and/or a cabin camera for identifying a user (e.g., using facial recognition and/or user gestures). Sensor subsystem 310 of in-vehicle computing system 209 may communicate with and receive inputs from various vehicle sensors and may further receive user inputs. For example, the inputs received by sensor subsystem 310 may include transmission gear position, transmission clutch position, gas pedal input, brake input, transmission selector position, vehicle speed, engine speed, mass airflow through the engine, ambient temperature, intake air temperature, and so on, as well as inputs from climate control system sensors (such as heat transfer fluid temperature, antifreeze temperature, fan speed, passenger compartment temperature, desired passenger compartment temperature, ambient humidity, and so on), an audio sensor detecting voice commands issued by a user, a fob sensor receiving commands from and optionally tracking the geographic location/proximity of a fob of the vehicle, and so on.

While certain vehicle system sensors may communicate with sensor subsystem 310 alone, other sensors may communicate with both sensor subsystem 310 and vehicle control system 330, or may communicate with sensor subsystem 310 indirectly via vehicle control system 330. A navigation subsystem 311 of in-vehicle computing system 209 may generate, transmit, receive, and/or process navigation information such as location information (e.g., via a GPS sensor and/or other sensors from sensor subsystem 310), route guidance, traffic information, point-of-interest (POI) identification, and/or provide other navigational services for the driver.

A communications system 312 of in-vehicle computing system 209 may be coupleable to and/or communicate with one or more external devices 250 located external to vehicle 202. The communications system 312 may be included as part of or otherwise coupled to the one or more vehicle software systems 108 described with respect to FIG. 1. The communications system is in electronic communication with the electronic controller 212 of the vehicle 202 and may be commanded by the electronic controller 212 to establish communication connections and generate and transmit communications, similar to the examples described above. As one example, the electronic controller 212 may command the communications system 312 to establish communication with one or more external devices 250. The external devices 250 may include other vehicles, fuel providers (e.g., charging stations), RSUs arranged along roadways, and so on via one or more types of communication, including wired communication and/or OTA programming such as WiFi, cellular data, and V2X. In some examples, the communications system 312 may communicate wirelessly with the external devices 250 via a communication module.

Vehicle control system 330 may include controls for controlling aspects of various vehicle systems 331 involved in different in-vehicle functions. These may include, for example, controlling aspects of vehicle audio system 332, aspects of a climate control system 334, aspects of a telecommunication system 336, and so on. The vehicle control system 330 may operate based on stored operating system software, such as the operating software 110 of FIG. 1.

Vehicle control system 330 may also include controls for adjusting the settings of various vehicle control elements 361 (or vehicle controls, or vehicle system control elements) related to the engine and/or auxiliary elements within the cabin of the vehicle, such as one or more steering wheel controls 362 (e.g., steering wheel-mounted audio system controls, cruise controls, windshield wiper controls, headlight controls, turn signal controls, and so on), instrument panel controls, microphone(s), accelerator/brake/clutch pedals, a gear shift, door/window controls positioned in a driver or passenger door, seat controls, cabin light controls, audio system controls, cabin temperature controls, and so on. Vehicle control elements 361 may also include internal engine and vehicle operation controls (e.g., engine controller module, actuators, valves, and so on) that are configured to receive instructions via the CAN bus of the vehicle to change operation of one or more of the engine, exhaust system, transmission, and/or other vehicle system.

In-vehicle computing system 209 may further include one or more antennas 306. The in-vehicle computing system may obtain broadband wireless internet access via antennas 306, and may further receive broadcast signals such as radio, television, weather, traffic, and the like. In some examples, one or more antennas may be included with the communications system 312 and may be configured to receive communications from vehicles or other external entities external to the vehicle 202, including charging stations. In-vehicle computing system 209 may receive positioning signals such as GPS signals via antennas 306. The in-vehicle computing system may also receive wireless commands via radio frequency (RF) such as via antennas 306 or via infrared or other means through appropriate receiving devices. In some embodiments, antenna 306 may be included as part of audio system 332 or telecommunication system 336. Additionally, antenna 306 may provide AM/FM radio signals to external devices 250, in some examples.

The vehicle 202 further includes one or more transmitters 338. In some examples, one or more of the transmitters 338 may be integrated together with one or more of the antennas 306 to form one or more transceivers configured to generate and transmit OTA communications, and receive and process OTA communications, through communications system 312.

One or more elements of in-vehicle computing system 209 may be controlled by a user via user interface 318. User interface 318 may include a graphical user interface presented on a touch screen, such as touch screen 208 and/or display screen 211 of FIG. 2, and/or user-actuated buttons, switches, knobs, dials, sliders, and so on. For example, user-actuated elements may include steering wheel controls, door and/or window controls, instrument panel controls, audio system settings, climate control system settings, and the like. A user may also interact with one or more applications of in-vehicle computing system 209 via user interface 318. In addition to receiving a user's vehicle setting preferences on user interface 318, vehicle settings selected by in-vehicle control system 330 may be displayed to a user on user interface 318. Notifications and other messages (e.g., received messages), as well as navigational assistance, may be displayed to the user on a display of the user interface. User preferences/information and/or responses to presented messages may be performed via user input to the user interface.

Although the electronic controller 212 is shown including the operating system processor 314, memory 319A, memory 319B, and so on, in some embodiments the electronic controller 212 may include a different number and/or configuration of components. For example, the electronic controller 212 may additionally be integrated with the one or more antennas 306, the one or more transmitters 338, and so on.

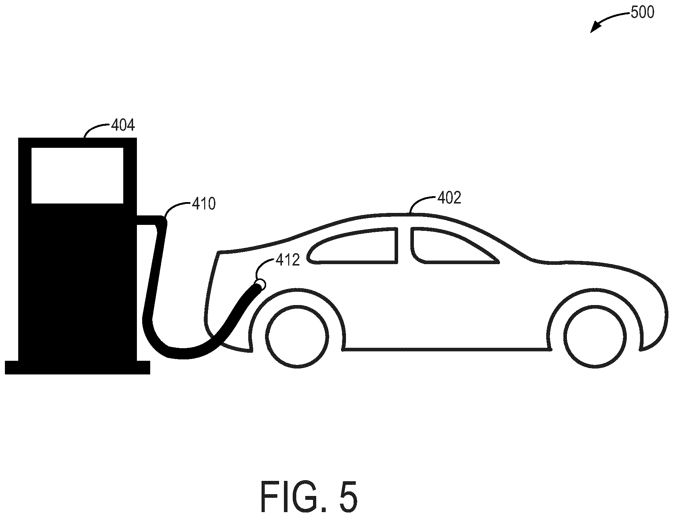

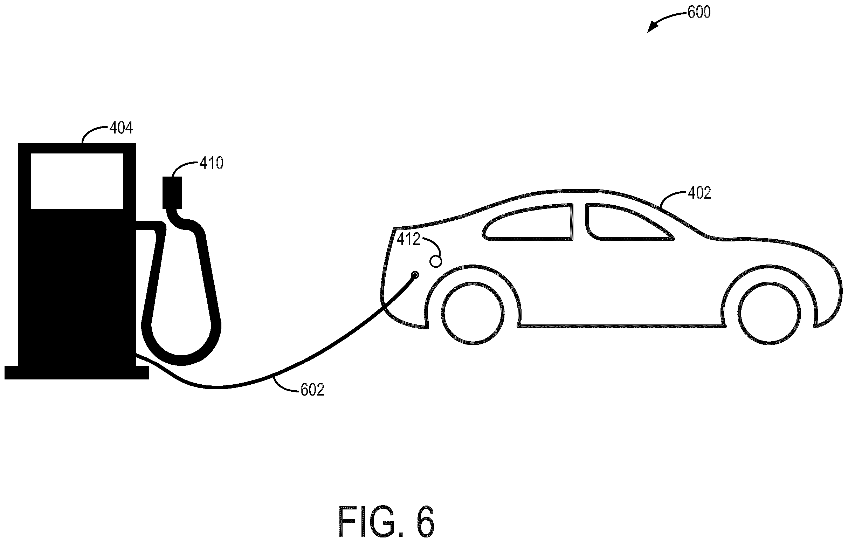

Turning now to FIGS. 4-6, various scenarios for establishing a connection between a vehicle and a charging station for vehicle software updates are shown. In particular, FIG. 4 shows a first scenario 400 including wireless communication, FIG. 5 shows a second scenario 500 including a data channel embedded within a charging connector, and FIG. 6 shows a third scenario 600 included a dedicated data cable.

Referring to FIG. 4, the first scenario 400 includes a vehicle 402 and a charging station 404. The vehicle 402 may be a non-limiting example of the vehicle 101 of FIG. 1 and the charging station 404 may be a non-limiting example of the charging system 141 of FIG. 1. The vehicle 402 may be a BEV, PHEV, other type of electric vehicle, or hydrogen-powered vehicle. As such, the vehicle 402 may comprise a charging port 412. The charging port 412 may be configured to receive a charging connector 410 of the charging station 404.

As described with respect to FIG. 1, in some examples, the charging station 404 and the vehicle 402 may each comprise a computing system configured for OTA software updates, for example via WiFi, cellular data, V2X, or other wireless communication. Thus, the charging station 404 and the vehicle 402 may establish a connection 420 therebetween. The connection 420 may be established when the vehicle 402 is not connected to the charging station 404 via the charging connector 410, in some examples as is shown in FIG. 3. In other examples, the connection 420 may be established wirelessly when the charging connector 410 is connected to the vehicle 402 via the charging port 412. In yet further examples, the connection 420 may be established whether or not the charging connector 410 is connected to the charging port 412.

Referring now to FIG. 5, the second scenario 500 includes the vehicle 402 and the charging station 404. In the second scenario 400, the charging connector 410 may be configured with an embedded data channel (not shown) therewithin. The charging connector 410 thus establishes a connection between the vehicle 402 and the charging station 404 when the charging connector 410 is connected to the vehicle 402 via the charging port 412.

Thus, the software updates to the vehicle computing system may be performed while the vehicle 402 is connected to the charging station 404. For example, the software updates may be performed while the vehicle battery is being charged. The charging station 404, as previously described, may be a public or private charging station

Referring now to FIG. 6, the third scenario 600 includes the vehicle 402 and the charging station 404 communicatively coupled via a data cable 602. The data cable 602 may be configured specifically for software update management, in some examples. In other examples, the data cable 602 may be configured for other purposes as well as for software updates. The data cable 602 may be connected as a component of the charging station 404, similar to the charging connector 410. The data cable 602 may then be extended, for example manually by the user of the vehicle 402, towards the vehicle 402 when within a distance defined by the length of the data cable 602. The data cable 602 may then be connected to a port of the vehicle 402. In some examples, this port may be an external port. In other examples, the port may be inside a cabin of the vehicle 402. For example, the data cable 602 may be configured as an Ethernet cable.

In some examples, the data cable 602 may be a separate cable from the charging connector 410, as is shown in FIG. 6. In other examples, the data cable 602 may be incorporated into the charging connector 410. In such examples, the data cable 602 may be communicatively coupled to the vehicle 402 when the charging connector 410 is coupled to the charging port 412 of the vehicle 402.

Turning now to FIGS. 7 and 8, methods for vehicle computing system software update are shown. FIG. 7 specifically shows a flowchart illustrating a method executable by an OTA integrated charging station in communication with a vehicle computing system and FIG. 8 specifically shows a flowchart illustrating a method executable by a vehicle computing system in communication with a client integrated charging station. Method 700 may be executed by a processor (e.g., processor 146 of charging system 141) according to machine-readable instructions stored in non-transitory memory (e.g., non-transitory memory 144 of charging system 141) of the client integrated charging station. Method 800 may be executed by a processor (e.g., processor 106 of vehicle 101) according to machine-readable instructions stored in non-transitory memory (e.g., non-transitory memory 104 of vehicle 101) of the vehicle.

Starting with method 700, at 702, method 700 includes establishing communication a vehicle computing system of a vehicle. As described with respect to FIGS. 4-6, communication may be established between the OTA integrated charging station and the vehicle computing system in various ways. For example, a data channel may be embedded within the charging connector of the charging station and when the charging connector is coupled to the charging port, communication may be established. In another example, a wireless connection may be established (e.g., via a private WiFi network). In yet further examples, a dedicated data cable either separate from the charging cable or embedded within the charging cable may be coupled to the vehicle to establish communication with the vehicle computing system.

At 704, method 700 includes determining vehicle specifics of the vehicle. The OTA integrated charging station may determine the vehicle specifics when the communication is established. In some examples, the charging station may receive a transmission of one or more vehicle specifics from the vehicle computing system. The vehicle specifics may include a current operating software, a vehicle make, model, year, and the like. The vehicle specifics may identify the vehicle to the OEM in order for a proper software update to be identified.

At 706, method 700 includes establishing communication with the OEM system. The OEM system, as described with respect to FIG. 1, may store various operating software configurations and updates for different vehicles. The OTA integrated charging station, for example the OEM communication subsystem 150 that is configured with OTA technology, may act as a representation of the vehicle for the OEM system. The communication connection between the charging station and the OEM system may be wireless, for example an OTA connection.

At 708, method 700 includes determining whether the vehicle is due for a software update. In some examples, this may be a message sent from the vehicle to the charging station via the established communication that the vehicle has attempted an OTA software update with an OEM system, but due to one of a variety of factors, has been unable to install the software update. The variety of reasons may include lack of reliable WiFi or cellular data connection during an attempted OTA software update, a drop in connection during OTA software update, an overly long queue of vehicles waiting for OTA updates from the OEM system, lack of adequate downtime for installation resulting in the user rejecting the software update, and the like. If the vehicle is due for a software update but has been unable to complete the update itself, method 700 proceeds to 710. If the vehicle is not due for a software update, for example if it was able to install the OTA software update from the OEM system, method 700 ends.

In other examples, for example when the vehicle has not established a connection with the OEM system and thus the vehicle computing system is unaware of the availability of the software update, the vehicle may not indicate that it is due or not for the software update. In such examples, method 700 proceeds from 706 straight to 710.

At 710, method 700 includes determining whether a software update for the vehicle is available. As noted, the OEM system may store a plurality of software update configurations for various vehicles. In some instances, a software update may be available for the vehicle based on the provided one or more vehicle specifics. In other instances, the software that the vehicle currently operates with may be the most up to date software available and an update may not be available within the OEM system. Further, in examples in which the vehicle attempted OTA software update with the OEM system but was unable to install the update, the update configuration may have changed in the time period between the attempted OTA update and the time when the charging station is communicating with the OEM system, in which case the OEM system may identify the most up to date available software update for the vehicle based on the vehicle specifics. If a software update is available, method 700 proceeds to 712. If a software update is not available, method 700 ends.

At 712, method 700 includes retrieving the software update specific to the vehicle from the OEM system. As noted, the OEM system may store software updates for multiple vehicles. The OTA integrated charging station, representing the vehicle with the determined vehicle specifics, may retrieve the software update(s) for the vehicle from the OEM system based on the one or more vehicle specifics retrieved from the vehicle. The software updates may be retrieved by the computing system of the charging station from the OEM system wirelessly (e.g., via OTA). The retrieved software update may be temporarily stored in memory of the computing system of the charging station.

At 714, method 700 includes determining whether a software update installation request has been received from the vehicle. For example, the computing system of the vehicle may display an alert via a display screen (e.g., display screen 116) indicating that the software update is available to be downloaded. The user may then interact with the alert, for example by a touch screen input, indicating whether or not the available software update is to be downloaded to the vehicle computing system. The user input in such cases may be the request that is received by the charging station computing system. In other examples, settings of the vehicle computing system may be set such that software updates are downloaded automatically, for example at regular intervals, whenever available, or based on patterns of vehicle activity. For example, when the charging station is a private residence charging station, the vehicle computing system may learn that on most weekdays, the vehicle is inactive and charging for a period of time and during this period of the time the vehicle computing system may transmit the installation request given the likelihood of having time to install the update while the vehicle is inactive. In such cases, the request may be received from the vehicle computing system according to the pre-determined settings. If the request for software update is received, method 700 proceeds to 714. If the request has not been received, method 700 ends.

In alternative examples, request for the software update, or a request to check for software update availability, may be received prior to determining vehicle specifics and/or prior to establishing a connection with the OEM system and retrieving the software update from the OEM system.

At 716, method 700 includes installing the software updates to the vehicle computing system. In response to determination that the software update has been requested by the vehicle, the computing system of the charging station may upload the software updates that were received from the OEM system to the vehicle computing system. As described above, the vehicle computing system may comprise a software installer, which may receive the software update and install it or otherwise communicate with the computing system of the charging station to install the software update.

At 718, method 700 includes determining whether the software update installation is verified. The vehicle computing system may determine whether the software update was properly and/or fully installed. If the installation is verified, method 700 proceeds to 720. If the installation was not verified, for example if the installation was not successful for some reason, method 700 proceeds to 722.

At 722, method 700 includes employing a retry mechanism. The retry mechanism may include the computing system of the charging station attempting to install the software update to the vehicle computing system again. After employing the retry mechanism, the method 700 may return to 718 to again determine if the installation is verified. In some examples, a preset number of retries may be known, in which, as a non-limiting example, the computing system of the charging station attempts installation three times, after which upon the third unsuccessful installation, the computing system of the charging station may not retry and a report of unsuccessful installation may be sent to the OEM system.

At 720, following verification of the installation, method 700 includes sending a report of the successful software update to the OEM system. The report may include the vehicle specifics as well as a software update identifier so that the OEM system may store data of which vehicle was updated with which software at the given time.

In this way, the charging station, when configured with an OTA client, may allow for regular and convenient software updates of a connected vehicle. Further, processing demands on the vehicle computing system may be reduced as the charging station may represent the vehicle when communicating with the OEM system, thereby reducing need for the vehicle to monitor for updates constantly or at regular intervals. Additionally, when the vehicle is unable to complete OTA software update by itself due to WiFi or cellular data connectivity issues, the OTA integrated charging station provides an easy route for the vehicle to receive software updates in a timely and convenient manner. Further, some vehicles may be configured to monitor for software updates at preset intervals, while software updates may be available at earlier times than the preset intervals. In this case, even when the vehicle is able to complete OTA software updates on its own, the charging station may allow for the vehicle to receive the most up to date software update earlier than would occur based on its own monitoring schedule.

In some examples, for example when the charging station is a private residence charging station, the vehicle specifics may be determined for a first software update session and may then be known to the charging station (e.g., stored in memory), thereby reducing the need for the charging station to establish a connection and determine vehicle specifics before communicating with the OEM system for each subsequent software update. In such examples, establishing communication with the vehicle computing system may be delayed until after retrieval of a software update.

In the corresponding method 800 of the vehicle computing system, at 802, method 800 determines whether an OTA software update is unavailable to the vehicle. In some examples, the vehicle may be equipped with OTA programming that allows the vehicle to retrieve OTA software updates from the OEM system. Such OTA software updates demand reliable WiFi and/or cellular data connection in order to install. The OTA software update may be unavailable in examples in which reliable WiFi and/or cellular data connections are unavailable. In some instances, the vehicle may attempt OTA software update but may be unable to install the OTA software update due to connectivity issues. Thus, the vehicle computing system may know that there is a software update from the OEM system that is available but may be unable to retrieve it. If the OTA software update is unavailable (YES at 802), method 800 proceeds to 804. If the OTA software update is available (NO at 802), method 800 proceeds to 816 to install OTA software update to the vehicle from the OEM system.

In some examples, the determination at 802 may be an optional step, whereby the method 800 may start at 804, as described below, regardless of whether the vehicle has been unable to complete an OTA software update via the OEM system. For example, the vehicle may not be equipped for OTA software updates, such as those vehicles configured mainly for in-person software updates at a dealership. In such a case, the vehicle may establish communication with the charging station, as described below, and receive software updates in that way without having attempting OTA software update itself.

At 804, method 800 includes establishing communication between the vehicle computing system and a computing system of a charging station. The charging station may be an OTA client integrated charging station configured to communicatively couple to the vehicle via a wired connection (e.g., via a dedicated data cable or a data channel embedded within the charging connector) and/or a wireless connection (e.g., via WiFi, cellular data, V2X, etc.). As previously described, the charging station may wirelessly communicate with the OEM system as well.

At 806, method 800 includes determining whether the charging station is client integrated. The charging station, as previously noted, may be configured as an OTA-client integrated charging station whereby the charging station is capable of communicating with the OEM system via OTA programming in order to determine availability of software updates and retrieve a software update if available. If the charging station is client integrated, method 800 proceeds to 808. If the charging station is not client integrated, method 800 ends.

At 808, method 800 includes sending vehicle specifics to the computing system of the charging station. Once communication between the charging station and the vehicle is established, the vehicle may send vehicle specifics to the charging station. The vehicle specifics, as previously noted, may include a current operating software as well as make, model, year, and the like that may identify what software updates are available for the vehicle.

At 810, method 800 includes determining whether a software update is available. As noted with respect to method 700, the charging station may communicate with the OEM system to determine whether a software update is available for the vehicle and retrieve the software update from the OEM system if so. If a software update for the vehicle computing system is available, a notification or other type of communication indicating that the software update is available may be received by the vehicle computing system from the computing system of the charging station. For example, a notification may be displayed on a display screen within the vehicle (e.g., display screen 116 of FIG. 1) or on a personal device such as a smartphone wirelessly connected to the vehicle computing system. If a software update is available, method 800 proceeds to 808. If a software update is not available, method 800 ends.

At 812, method 800 includes determining if an installation request has been sent. As noted at 806, when the software update is available, a notification or other indicator that the software update is available may be received by the vehicle computing system. In some examples, the vehicle computing may be equipped with instructions stored in non-transitory memory that when one or more conditions are met, sends an installation request to the computing system of the charging station. For example, the one or more conditions may be a timeframe such that software updates are performed at regular intervals if available. Alternatively, as described above, the one or more conditions may be learned habits of the vehicle, for example the vehicle computing system may learn that the vehicle is typically inactive for a period of time, for example in the evenings, and thus if the vehicle is inactive during the period of time, the installation request may be sent. In yet further examples, the vehicle computing system may be configured to send the installation request upon manual input. For example, a notification may be displayed to the display of the infotainment system or to the user's connected personal device (e.g., smart phone) indicating that a software update is available. The user may then indicate via user input (e.g., a touch input) that they wish to proceed with installing the software update, which may trigger transmission of the installation request to the computing system of the charging station. If the installation request has been sent, method 800 proceeds to 810. If the installation request has not been sent, for example if certain conditions are not met or if user input indicates that the software update is not to be installed, method 800 ends. In this way, convenience of when software is updated may be increased, as the user may choose conditions when installation may occur or may manually choose times for installation that fit their schedule.

At 814, method 800 includes receiving software update from the computing system of the charging station. The computing system of the charging station may upload the software updates to the vehicle computing system via the connection established at 804. In some examples, receiving the software update and installing the software update may be performed substantially at the same time, whereby the computing system of the charging station communicates with a software installer of the vehicle computing system to install the software update. In other examples, the software update may be received by the vehicle computing system and stored temporarily in memory and then the software installer may install the update.

As described with respect to method 700, the vehicle computing system may verify when the installation is successful. In some examples, one or more unsuccessful installation attempts may occur in which case the vehicle computing system may receive the software updates from the charging station in one or more retries. The vehicle computing system may notify the computing system of the charging station when the installation is successful.

The methods described herein may increase convenience for the user, by allowing the user to determine when to install a software update, as well as decreasing the processing power of the vehicle computing system. Because the charging station determines availability of the software update and retrieves it from the OEM system, the vehicle computing system may have reduced load on its processers as the vehicle computing system may no longer need to maintain OTA connectivity with the OEM system and monitor for available software updates.

Further, inconvenience of in-person visits is mitigated while reducing the need for the vehicle to have reliable and regular access and connection to WiFi or cellular data in order to perform OTA software updates. Additionally, the queue of vehicles waiting for OTA updates from the OEM system may be reduced as the charging station may retrieve the software update from the OEM system based on determined or known vehicle specifics. Reducing the queue may reduce load and processing power for the OEM system. Further, the systems and methods herein provided may increase frequency of software updates, thereby allowing more vehicles to have up to date software. With more overall up to date operating system software across a wide range of vehicles, storage demands of current operating software on the OEM system may be reduced.

The disclosure also provides support for a method for an over-the-air (OTA) integrated charging station, comprising: establishing communication between a computing system of the OTA integrated charging station and a vehicle computing system of an electric vehicle, determining one or more vehicle specifics of the electric vehicle from the vehicle computing system, establishing communication between the computing system and an original equipment manufacturer (OEM) system, retrieving a software update from the OEM system based on the one or more vehicle specifics, and installing the software update to the vehicle computing system via a software installer thereof. In a first example of the method, the method further comprises: determining availability of the software update within the OEM system based on the one or more vehicle specifics. In a second example of the method, optionally including the first example, the method further comprises: sending a notification of availability of the software update to the electric vehicle. In a third example of the method, optionally including one or both of the first and second examples, installing the software update is performed in response to receiving an installation request from the vehicle. In a fourth example of the method, optionally including one or more or each of the first through third examples, establishing communication between the vehicle computing system and the computing system of the OTA integrated charging station comprises one of connecting a charging cable of the OTA integrated charging station to the electric vehicle, the charging cable embedded with a data channel and connecting a dedicated data cable of the charging station to the electric vehicle. In a fifth example of the method, optionally including one or more or each of the first through fourth examples, establishing communication between the vehicle computing system and the computing system of the OTA integrated charging station is in response to the electric vehicle being unable retrieve the software update from the OEM system via OTA programming. In a sixth example of the method, optionally including one or more or each of the first through fifth examples, establishing communication between the vehicle computing system and the computing system of the OTA integrated charging station comprises establishing an OTA connection therebetween. In a seventh example of the method, optionally including one or more or each of the first through sixth examples, establishing communication between the computing system of the OTA integrated charging station and the OEM system comprises establishing an OTA connection therebetween.

The disclosure also provides support for a vehicle software update system, comprising: an electric vehicle comprising a vehicle computing system controlled by software, an over-the-air (OTA) integrated charging station configured to communicate with the vehicle computing system, and an original equipment manufacturer (OEM) system configured to communicate with the OTA integrated charging station, wherein the OTA integrated charging station is configured to retrieve a software update for the vehicle from the OEM system and install the software update to the vehicle computing system. In a first example of the system, the OTA integrated charging station is configured to retrieve the software update from the OEM system via OTA programming. In a second example of the system, optionally including the first example, the OTA integrated charging station is configured to communicate with the vehicle computing system via one or more of OTA programming, a data channel embedded in a charging cable coupled to the vehicle, and a dedicated data cable coupled to the vehicle. In a third example of the system, optionally including one or both of the first and second examples, the OTA integrated charging station comprises a computing system including a vehicle communication subsystem and an OEM communication subsystem. In a fourth example of the system, optionally including one or more or each of the first through third examples, the vehicle communication subsystem comprises instructions stored in memory that, when executed by a processor of the computing system, cause the computing system to determine one or more vehicle specifics of the electric vehicle and install the software update on the vehicle computing system. In a fifth example of the system, optionally including one or more or each of the first through fourth examples, the OEM communication subsystem comprises instructions stored in memory that, when executed by the processor, cause the computing system to retrieve the software update for the electric vehicle from the OEM system based on the one or more vehicle specifics. In a sixth example of the system, optionally including one or more or each of the first through fifth examples, the vehicle computing system comprises a software installer configured to receive the software update from the OTA integrated charging station.

The disclosure also provides support for a method of a vehicle computing system, comprising: establishing communication with a computing system of an over-the-air (OTA) integrated charging station, transmitting one or more vehicle specifics to the computing system of the OTA integrated charging station, and receiving a software update from the computing system of the OTA integrated charging station based on the one or more vehicle specifics. In a first example of the method, the method further comprises: receiving a notification of availability of the software update from the computing system of the OTA integrated charging station. In a second example of the method, optionally including the first example, the software update is received in response to an installation request, wherein the installation request is transmitted to the computing system of the OTA integrated charging system based on one of user input and predetermined instructions stored in memory. In a third example of the method, optionally including one or both of the first and second examples, establishing communication with the computing system of the OTA integrated charging station is performed in response to the vehicle being unable to retrieve an OTA software update from an OEM system. In a fourth example of the method, optionally including one or more or each of the first through third examples, the software update is received by a software installer of the vehicle computing system.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The methods may be performed by executing stored instructions with one or more logic devices (e.g., processors) in combination with one or more additional hardware elements, such as storage devices, memory, hardware network interfaces/antennas, switches, actuators, clock circuits, and so on. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," and so on. are used merely as labels, and are not intended to impose numerical requirements or a particular positional order on their objects. The following claims particularly point out subject matter from the above disclosure that is regarded as novel and non-obvious.

## Claims

1. A method for an over-the-air (OTA) integrated charging station, comprising:
establishing communication between a computing system of the OTA integrated charging station and a vehicle computing system of an electric vehicle;
determining one or more vehicle specifics of the electric vehicle from the vehicle computing system;
establishing communication between the computing system and an original equipment manufacturer (OEM) system;
retrieving a software update from the OEM system based on the one or more vehicle specifics; and
installing the software update to the vehicle computing system via a software installer thereof.

2. The method of claim 1, further comprising determining availability of the software update within the OEM system based on the one or more vehicle specifics.

3. The method of claim 1, further comprising sending a notification of availability of the software update to the electric vehicle.

4. The method of claim 3, wherein installing the software update is performed in response to receiving an installation request from the vehicle.

5. The method of claim 1, wherein establishing communication between the vehicle computing system and the computing system of the OTA integrated charging station comprises one of connecting a charging cable of the OTA integrated charging station to the electric vehicle, the charging cable embedded with a data channel and connecting a dedicated data cable of the charging station to the electric vehicle.

6. The method of claim 1, wherein establishing communication between the vehicle computing system and the computing system of the OTA integrated charging station is in response to the electric vehicle being unable retrieve the software update from the OEM system via OTA programming.

7. The method of claim 1, wherein establishing communication between the vehicle computing system and the computing system of the OTA integrated charging station comprises establishing an OTA connection therebetween.

8. The method of claim 1, wherein establishing communication between the computing system of the OTA integrated charging station and the OEM system comprises establishing an OTA connection therebetween.

9. A vehicle software update system, comprising:
an electric vehicle comprising a vehicle computing system controlled by software;
an over-the-air (OTA) integrated charging station configured to communicate with the vehicle computing system; and
an original equipment manufacturer (OEM) system configured to communicate with the OTA integrated charging station, wherein the OTA integrated charging station is configured to retrieve a software update for the vehicle from the OEM system and install the software update to the vehicle computing system.

10. The vehicle software update system of claim 9, wherein the OTA integrated charging station is configured to retrieve the software update from the OEM system via OTA programming.

11. The vehicle software update system of claim 9, wherein the OTA integrated charging station is configured to communicate with the vehicle computing system via one or more of OTA programming, a data channel embedded in a charging cable coupled to the vehicle, and a dedicated data cable coupled to the vehicle.

12. The vehicle software update system of claim 9, wherein the OTA integrated charging station comprises a computing system including a vehicle communication subsystem and an OEM communication subsystem.

13. The vehicle software update system of claim 12, wherein the vehicle communication subsystem comprises instructions stored in memory that, when executed by a processor of the computing system, cause the computing system to determine one or more vehicle specifics of the electric vehicle and install the software update on the vehicle computing system.

14. The vehicle software update system of claim 13, wherein the OEM communication subsystem comprises instructions stored in memory that, when executed by the processor, cause the computing system to retrieve the software update for the electric vehicle from the OEM system based on the one or more vehicle specifics.

15. The vehicle software update system of claim 9, wherein the vehicle computing system comprises a software installer configured to receive the software update from the OTA integrated charging station.
